# EUROPEAN PATENT SPECIFICATION

(11) **EP 3 654 438 B1**
(45) Date of publication and mention of the grant of the patent: **27.03.2024**
(21) Application number: 18832038.6
(22) Date of filing: 05.07.2018
(51) Int. Cl.: H01M 10/0585, H01M 10/04, H01M 10/0562, H01M 50/109

(54) **COIN-SHAPED BATTERY AND METHOD FOR PRODUCING SAME**
MÜNZENFÖRMIGE BATTERIE UND VERFAHREN ZU IHRER HERSTELLUNG
BATTERIE EN FORME DE PIÈCE ET SON PROCÉDÉ DE PRODUCTION

(30) Priority: 12.07.2017 JP 2017136561
(43) Date of publication of application: 20.05.2020
(73) Proprietor: Hitachi Zosen Corporation, Osaka-shi, Osaka 559-8559 (JP)
(72) Inventor: SUGIYO, Takeshi, Osaka-shi Osaka 559-8559 (JP); KAWASE, Hirokazu, Osaka-shi Osaka 559-8559 (JP)
(74) Representative: Grünecker Patent- und Rechtsanwälte PartG mbB
(86) International application number: PCT/JP2018/025486
(87) International publication number: WO 2019/013084

(56) References cited:
- WO-A1-2011/064842
- WO-A1-2013/153693
- WO-A1-2017/104405
- JP-A- 2010 056 067
- JP-A- 2010 056 067
- JP-A- 2010 282 803
- JP-A- 2010 282 803
- US-A1- 2017 162 901
- US-B2- 6 355 378

## Description

### Technical Field

The present invention relates to a coin-shaped battery including a solid-electrolyte layer.

### Background Art

Conventionally, widely available coin-shaped batteries include liquid electrolytes (electrolytic solutions) as electrolytes, as disclosed in Patent Literatures 1 and 2. Such coin-shaped batteries therefore have risks of occurrence of liquid leakages, burning, and the like. Furthermore, operating temperature ranges of such coin-shaped batteries are limited due to volatilization, freezing, and the like of electrolytic solutions.

In order to solve these problems, coin-shaped batteries which include all-solid-state batteries employing solid electrolytes as electrolytes have been developed. Unfortunately, all-solid-state batteries generally have small capacities, and thus have low output. Therefore, it is not possible to obtain required electric currents.

As a coin-shaped all-solid-state battery which solves such a problem, Patent Literature 3 discloses a coin-shaped battery which includes an elastic body that applies pressure to a battery element disposed inside a metal case. According to the coin-shaped battery, the elastic body causes an increase in contact pressure between electrodes and a solid electrolyte which constitute the battery element. This suppresses a decrease in electric current density which decrease is caused by contact failure, and thereby allows an increase in output.

WO 2013/ 153693 A1 relates to a solid electrolyte for sulfide-based solid state battery, a sulfide-based solid state battery having the solid electrolyte and electrodes, and a method for producing same. JP 2010 282803 A relates to a manufacturing method of all-solid lithium ion secondary battery. US 6 355 378 B2 relates to a solid state electrolyte cell having at least one electrode impregnated with a solid electrolyte.

### Citation List

### [Patent Literature]

[Patent Literature 1]
   Japanese Patent Application Publication Tokukai No. 2011-159413 (published on August 18, 2011)
[Patent Literature 2]
   Japanese Patent No. 5317195 (issued on October 16, 2013)
[Patent Literature 3]
   Japanese Patent Application Publication Tokukai No. 2010-56067 (published on March 11, 2010)

### Summary of Invention

### Technical Problem

However, the coin-shaped battery disclosed in Patent Literature 3 includes a thick solid-electrolyte layer, and thus has high internal resistance. Therefore, in order to pressurize the battery element, it is necessary to employ, as the elastic body, a spring having a large spring constant. This requires the metal case and a sealing plate to be highly rigid. Accordingly, the metal case and the sealing plate must be formed so as to be thick. For the above reasons, it is difficult to reduce a weight and a size of the coin-shaped battery.

An object of an aspect of the present invention is to realize a coin-shaped battery which is light in weight and small in size.

### Solution to Problem

In order to attain the above object, a coin-shaped battery in accordance with the present invention is defined in claim 1.

### Advantageous Effects of Invention

According to an aspect of the present invention, it is possible to realize a coin-shaped battery which is light in weight and small in size.

### Brief Description of Drawings

Fig. 1 is a cross-sectional view illustrating a structure of a coin-shaped battery in accordance with Embodiment 1 of the present invention.
Fig. 2 is a drawing illustrating how to form laminated bodies of a coin-shaped battery in accordance with each Embodiment of the present invention.
Fig. 3 is a cross-sectional view illustrating a structure of a coin-shaped battery in accordance with Embodiment 2 of the present invention.
Fig. 4 is a perspective view illustrating an internal structure of a coin-shaped battery in accordance with Embodiment 3 of the present invention.
Fig. 5 is a cross-sectional view illustrating an internal structure of the coin-shaped battery in accordance with Embodiment 3 of the present invention.
Fig. 6 is a cross-sectional view illustrating another internal structure of the coin-shaped battery in accordance with Embodiment 3 of the present invention.
Fig. 7 is a cross-sectional view illustrating a structure of a coin-shaped battery in accordance with Embodiment 4 of the present invention.
Fig. 8 is a cross-sectional view illustrating a structure of a coin-shaped battery in accordance with Embodiment 5 of the present invention.
Fig. 9 is a cross-sectional view illustrating a structure of a coin-shaped battery in accordance with Embodiment 6 of the present invention.

### Description of Embodiments

### Embodiment 1

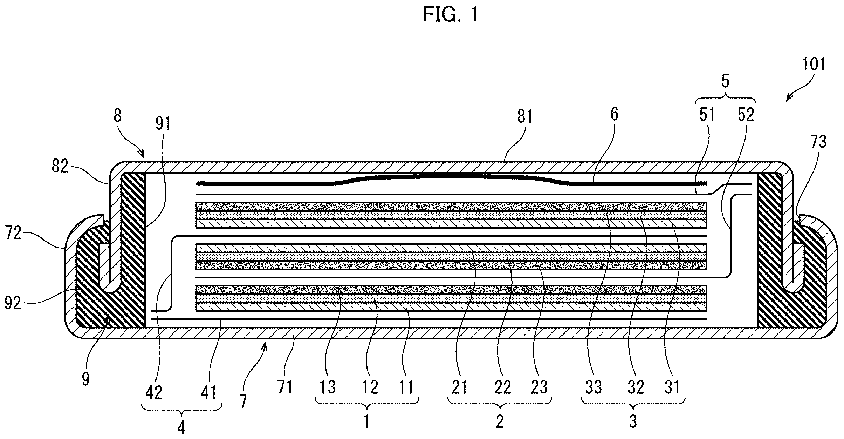

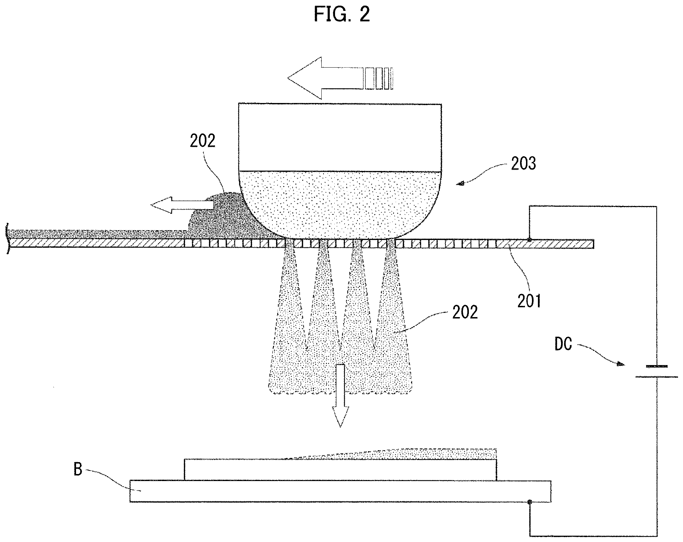

The following description will discuss Embodiment 1 of the present invention with reference to Figs. 1 and 2.

Each Embodiment, including Embodiment 1, will discuss, as an example of a coin-shaped battery, an all-solid-state secondary battery which employs a lithium-ion-conductive solid electrolyte, that is, an all-solid-state lithium-ion secondary battery. Note, however, that the coin-shaped battery in accordance with each Embodiment of the present invention is obviously not limited to an all-solid-state lithium-ion secondary battery.

Fig. 1 is a cross-sectional view illustrating a structure of a coin-shaped battery 101 in accordance with Embodiment 1.

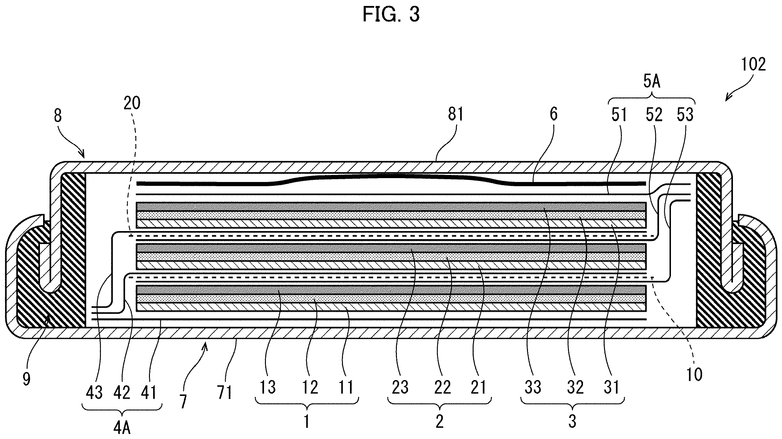

As illustrated in Fig. 1, the coin-shaped battery 101 includes laminated bodies 1 through 3, a positive electrode current collector group 4, a negative electrode current collector group 5, a pressurizing member 6, a metal case 7, a metal sealing plate 8, and a gasket 9. Note that a lower side of Fig. 1 is regarded as a positive-electrode side of the coin-shaped battery 101, and an upper side of Fig. 1 is regarded as a negative-electrode side of the coin-shaped battery 101. Note also that although Fig. 1 illustrates, for convenience, the laminated bodies 1 through 3, the positive electrode current collector group 4, the negative electrode current collector group 5, and the pressurizing member 6 in a state where they are spaced, adjacent ones of them are in contact with each other. Figs. 3 and 5 through 9 (later described) each illustrate these members in the same manner as Fig. 1.

The metal case 7 is made of metal, and has (i) a flat plate 71 having a circular shape and (ii) a side wall 72. The side wall 72 is formed in such a manner as to be bent from an outer periphery of the flat plate 71. An edge of the side wall 72 is curved toward an interior of the coin-shaped battery 101, and forms an opening 73 having a circular shape.

The metal sealing plate 8 is made of metal, and has (i) a flat plate 81 having a circular shape and (ii) a side wall 82. The flat plate 81 is formed so as to be smaller than the opening 73 of the metal case 7. The side wall 82 is formed in such a manner as to be bent from an outer periphery of the flat plate 81. An edge of the side wall 82 is folded back on an outer peripheral surface of the side wall 82. Note that the edge of the side wall 82 is not necessarily folded back on the outer peripheral surface of the side wall 82.

A size of each of the metal case 7 and the metal sealing plate 8 is preferably selected as appropriate in accordance with an application of the coin-shaped battery 101. Further, a material and the like of each of the metal case 7 and the metal sealing plate 8 is preferably selected as appropriate in accordance with, for example, a temperature range in which the coin-shaped battery 101 is used.

The gasket 9 is made of an elastic and electrically insulating resin, and is formed so as to have an annular shape. The gasket 9 has an inner peripheral part 91 and an outer peripheral part 92. The inner peripheral part 91 is disposed between an inner surface of the flat plate 71 of the metal case 7 and an inner surface of the flat plate 81 of the metal sealing plate 8 so as to extend along an inner peripheral surface of the side wall 82 of the metal sealing plate 8. The outer peripheral part 92 is disposed so as to extend from the inner surface of the flat plate 71 of the metal case 7 to a gap between an inner peripheral surface of the side wall 72 of the metal case 7 and an outer peripheral surface of the flat plate 81 of the metal sealing plate 8. Note, however, that the outer peripheral part 92 is not limited to such a structure.

As described above, the edge of the side wall 72 is curved toward the interior of the coin-shaped battery 101. This causes the edge of the side wall 72 and the side wall 82 of the metal sealing plate 8 to be swaged together in such a manner as to sandwich the outer peripheral part 92 of the gasket 9 therebetween. As a result, while the metal case 7 (positive electrode) and the metal sealing plate 8 (negative electrode) are electrically insulated from each other, the metal case 7 and the metal sealing plate 8 are joined together, and a gap between the metal case 7 and the metal sealing plate 8 is sealed. Further, an enclosed space is formed by the flat plate 71 of the metal case 7, the flat plate 81 of the metal sealing plate 8, and the inner peripheral part 91 of the gasket 9. In this space, the laminated bodies 1 through 3, the positive electrode current collector group 4, the negative electrode current collector group 5, and the pressurizing member 6 are disposed.

The pressurizing member 6 is a member which pressurizes the laminated bodies 1 through 3, the positive electrode current collector group 4, and the negative electrode current collector group 5 which are stacked as later described. The pressurizing member 6 is constituted by a spring element (for example, a leaf spring), a shim, or the like, and is made of an electrically conductive or electrically insulating material. The pressurizing member 6 presses, by its elastic force, the laminated bodies 1 through 3, the positive electrode current collector group 4, and the negative electrode current collector group 5 so that each of them is in intimate contact with an adjacent one(s) of them. The pressurizing member 6 is provided, not for the purpose of applying great pressure to each of the laminated bodies 1 through 3, but for the purpose of causing each of the positive electrode current collector group 4 and the negative electrode current collector group 5 to be in contact with the metal case 7 or the metal sealing plate 8 and causing a pressurizing force for pressurizing each of the laminated bodies 1 through 3 to be uniform. Therefore, a shape of the pressurizing member 6 is not limited to a shape of a flat plate. Specifically, it is necessary to select and employ a member such as (i) a circular plate whose central part is raised, (ii) a hollow member such as a washer, or (iii) a wavy washer, as the pressurizing member 6, depending on a thickness of each of the laminated bodies 1 through 3 or a deformed state of the metal case 7 which has been swaged.

The laminated bodies 1 through 3 are disposed so that the laminated body 1, the laminated body, 2, and the laminated body 3 are located in this order from the positive-electrode side.

The laminated body 1 includes a positive electrode layer 11 (first electrode layer), a solid-electrolyte layer 12, and a negative electrode layer 13 (second electrode layer) which has a polarity opposite from that of the positive electrode layer 11. The positive electrode layer 11, the solid-electrolyte layer 12, and the negative electrode layer 13 are stacked in this order. The positive electrode layer 11 is disposed on a side closer to the flat plate 71 of the metal case 7. The negative electrode layer 13 is disposed on a side closer to the flat plate 81 of the metal sealing plate 8. The solid-electrolyte layer 12 is disposed between the positive electrode layer 11 and the negative electrode layer 13.

The laminated body 2 includes a positive electrode layer 21 (first electrode layer), a solid-electrolyte layer 22, and a negative electrode layer 23 (second electrode layer) which has a polarity opposite from that of the positive electrode layer 11. The positive electrode layer 21, the solid-electrolyte layer 22, and the negative electrode layer 23 are stacked in this order. The positive electrode layer 21 is disposed on a side closer to the flat plate 81 of the metal sealing plate 8. The negative electrode layer 23 is disposed on a side closer to the flat plate 71 of the metal case 7. The solid-electrolyte layer 22 is disposed between the positive electrode layer 21 and the negative electrode layer 23.

The laminated body 3 includes a positive electrode layer 31 (first electrode layer), a solid-electrolyte layer 32, and a negative electrode layer 33 (second electrode layer) which has a polarity opposite from that of the positive electrode layer 11. The positive electrode layer 31, the solid-electrolyte layer 32, and the negative electrode layer 33 are stacked in this order. The positive electrode layer 31 is disposed on a side closer to the flat plate 71 of the metal case 7. The negative electrode layer 33 is disposed on a side closer to the flat plate 81 of the metal sealing plate 8. The solid-electrolyte layer 32 is disposed between the positive electrode layer 31 and the negative electrode layer 33.

In this manner, the laminated bodies 1 and 2 are disposed so that the negative electrode layer 13 of the laminated body 1 faces the negative electrode layer 23 of the laminated body 2. Further, the laminated bodies 2 and 3 are disposed so that the positive electrode layer 21 of the laminated body 2 faces the positive electrode layer 31 of the laminated body 3. In other words, the positive electrode layer 11 of the laminated body 1 and the positive electrode layer 31 of the laminated body 3 are both disposed on the positive-electrode side, and the negative electrode layer 13 of the laminated body 1 and the negative electrode layer 33 of the laminated body 3 are both disposed on the negative-electrode side. Meanwhile, the positive electrode layer 21 of the laminated body 2 is disposed on a side different from a side on which the positive electrode layer 11 of the laminated body 1 and the positive electrode layer 31 of the laminated body 3 are disposed, and the negative electrode layer 23 of the laminated body 2 is disposed on a side different from a side on which the negative electrode layer 13 of the laminated body 1 and the negative electrode layer 33 of the laminated body 3 are disposed.

A planar shape of each of the laminated bodies 1 through 3 is ideally a circular shape, but is not limited to a circular shape, provided that each of the laminated bodies 1 through 3 has such a shape that allows each of the laminated bodies 1 through 3 to be housed in the foregoing enclosed space. For example, the planar shape of each of the laminated bodies 1 through 3 can be a polygonal shape, a shape composed of a straight line and a curved line, or the like. Note that each of the laminated bodies 1 through 3 is formed so as to have an identical planar shape and an identical size (area).

Each of the positive electrode layers 11, 21, and 31 is made of a composite material (mixture) of a positive electrode active material and a solid electrolyte or is alternatively made of a positive electrode active material alone. A weight ratio between the positive electrode active material and the solid electrolyte in the composite material is, for example, 7:3. The positive electrode active material can be a positive electrode active material which is typically used in the field of all-solid-state batteries. Examples of the positive electrode active material which is used for all-solid-state batteries include: oxides such as lithium-containing oxides containing cobalt, nickel, and/or manganese (for example, lithium cobalt oxide (LiCoOa), lithium nickel oxide (LiNiO₂), lithium manganese oxide (spinel lithium manganese oxide (such as LiMn₂O₄)), and lithium nickel cobalt manganese oxide (such as LiNi_{1/3}Co_{1/3}Mn_{1/3}O₂)) and composite oxides containing excess lithium (LiaMnOs-LiMOa); and compounds other than the oxides. Examples of the compounds other than the oxides include olivine-based compounds (LiMPO₄) and sulfur-containing compounds (such as Li₂S). Note that M in the above chemical formulae represents transition metal. One kind of positive electrode active material can be used solely. Alternatively, two or more kinds of positive electrode active materials can be used in combination. From the viewpoint of easiness of obtainment of a high capacity, a lithium-containing oxide containing at least one selected from the group consisting of Co, Ni, and Mn is preferable. The lithium-containing oxide can further contain a representative metal element such as Al. Examples of the lithium-containing oxide containing Al include aluminum-containing lithium nickel cobalt oxide.

Each of the negative electrode layers 13, 23, and 33 is made of a composite material (mixture) of a negative electrode active material and a solid electrolyte or is alternatively made of a negative electrode active material alone. A weight ratio between the negative electrode active material and the solid electrolyte in the composite material is, for example, 6:4. The negative electrode active material is not limited to any particular one and can be a publicly known negative electrode active material which is used for all-solid-state batteries, provided that the negative electrode active material allows ions, serving as carriers of electric charges depending on a type of an all-solid-state battery, to be inserted thereinto and desorbed therefrom. In a case where an all-solid-state battery is taken as an example, examples of the negative electrode active material include: carbonaceous materials which allow lithium ions to be inserted thereinto and desorbed therefrom; and simple metal, simple semimetal, alloys, and compounds which allow lithium ions to be alloyed therewith and dealloyed therefrom. Examples of the carbonaceous materials include graphite (such as natural graphite and artificial graphite), hard carbon, and amorphous carbon. Examples of the simple metal, the simple semimetal, and the alloys include lithium metal, lithium metal-containing alloys, and simple silicon. Examples of the compounds include oxides, sulfides, nitrides, hydrides, and silicides (such as lithium silicide). Examples of the oxides include titanium oxide, lithium titanium oxide, and silicon oxide. One kind of negative electrode active material can be used solely. Alternatively, two or more kinds of negative electrode active materials can be used in combination. For example, silicon oxide and a carbonaceous material can be used in combination.

The solid electrolyte used for each of the positive electrode layers 11, 21, and 31, the solid-electrolyte layers 12, 22, and 32, and the negative electrode layers 13, 23, and 33 contains an ion-conductive inorganic solid electrolyte. Pressurizing a battery causes plastic deformation of solid electrolyte particles. This allows the solid electrolyte particles to be in intimate contact with each other. Furthermore, the plastic deformation of the solid electrolyte particles present near a surface of a solid-electrolyte layer also allows an increase in intimate contact between the solid-electrolyte layer and a positive electrode layer and/or a negative electrode layer.

The inorganic solid electrolyte is preferably a sulfide (sulfide-based solid electrolyte) or a hydride (hydride-based solid electrolyte), from the viewpoint of easiness of plastic deformation. Generally, the hydride also includes a solid electrolyte referred to as a complex hydride. A crystalline state of the solid electrolyte is not limited to any particular one, and the solid electrolyte can be crystalline or amorphous.

The sulfide is more preferably a sulfide containing Li and P, for example. Specific examples of the sulfide include Li₂S-SiS₂, Li₂S-P₂S₅, Li₂S-GeS₂, Li₂S-B₂S₃, Li₂S-Ga₂S₃, Li₂SAl₂S₃, Li₂S-GeS₂-P₂S₅, Li₂S-Al₂S₃-P₂S₅, Li₂S-P₂S₃, Li₂S-P₂S₃-P₂S₅, LiX-Li₂S-P₂S₅, LiX-Li₂S-SiS₂, and LiX-Li₂S-B₂S₃ (X: I, Br, Cl, or I).

Examples of the hydride include complex hydrides of lithium borohydride. Examples of the complex hydrides include LiBH4-LiI-based complex hydride, LiBH4-LiNH2-based complex hydride, LiBH₄-P₂S₅, and LiBH₄-P₂I₄. One kind of solid electrolyte can be used solely. Alternatively, two or more kinds of solid electrolytes can be used in combination as necessary. The same kind of solid electrolyte can be used for the positive electrodes and the negative electrodes. Alternatively, different kinds of solid electrolytes can be used for the positive electrodes and the negative electrodes.

One kind of inorganic solid electrolyte can be used solely. Alternatively, two or more kinds of inorganic solid electrolytes can be used in combination as necessary. The same kind of solid electrolytes can be used for the positive electrode layers and the negative electrode layers. Alternatively, different kinds of solid electrolytes can be used for the positive electrode layers and the negative electrode layers.

The positive electrode current collector group 4 includes positive electrode current collectors 41 and 42 which are connected to each other. The positive electrode current collector 41 is disposed between the flat plate 71 of the metal case 7 and the positive electrode layer 11 of the laminated body 1 so as to be in contact with the flat plate 71 of the metal case 7 and the positive electrode layer 11 of the laminated body 1. The positive electrode current collector 42 is disposed between the positive electrode layer 21 of the laminated body 2 and the positive electrode layer 31 of the laminated body 3 so as to be in contact with the positive electrode layer 21 of the laminated body 2 and the positive electrode layer 31 of the laminated body 3. With this configuration, the positive electrode current collector group 4 is electrically connected to the metal case 7.

The negative electrode current collector group 5 includes negative electrode current collectors 51 and 52 which are connected to each other. The negative electrode current collector 51 is disposed between the pressurizing member 6 and the negative electrode layer 33 of the laminated body 3. The negative electrode current collector 51 is substantially entirely in contact with the negative electrode layer 33, and one end of the negative electrode current collector 51 is in contact with the metal sealing plate 8. The negative electrode current collector 52 is disposed between the negative electrode layer 13 of the laminated body 1 and the negative electrode layer 23 of the laminated body 2 so as to be in contact with the negative electrode layer 13 of the laminated body 1 and the negative electrode layer 23 of the laminated body 2. One end of the negative electrode current collector 52 is in contact with the metal sealing plate 8.

Each of the positive electrode current collector group 4 and the negative electrode current collector group 5 is made of copper, magnesium, stainless steel, titanium, iron, cobalt, nickel, zinc, aluminum, germanium, indium, lithium, tin, or an alloy of any of these materials. Each of the positive electrode current collector group 4 and the negative electrode current collector group 5 is in the form of a plate, foil, a film, or the like.

A single current collection point is provided for each of the positive electrode current collector group 4 and the negative electrode current collector group 5. Alternatively, a current collection point can be provided for each of the positive electrode current collectors 41 and 42 and the negative electrode current collectors 51 and 52. The current collection point of the positive electrode current collector group 4 and the current collection point of the negative electrode current collector group 5 do not need to be disposed 180 degrees apart from each other relative to the center of the coin-shaped battery 101.

Each electrode can further contain, as necessary, a publicly known component which is used for electrodes of all-solid-state batteries, such as a binder, an electrically conductive auxiliary agent, and any other additive.

By a structure in which the positive electrode current collector group 4 is electrically connected to the metal case 7 and a structure in which the negative electrode current collector group 5 is electrically connected to the metal sealing plate 8, the metal case 7 functions as a positive electrode, and the metal sealing plate 8 functions as a negative electrode. Further, the positive electrode layers 11, 21, and 31 are connected to each other via the positive electrode current collector group 4, and the negative electrode layers 13, 23, and 33 are connected to each other via the negative electrode current collector group 5. Thus, the laminated bodies 1 through 3 are connected to each other in parallel.

In a case where the coin-shaped battery 101 is an all-solid-state lithium-ion secondary battery, it is possible to secure a sufficient voltage without connecting the laminated bodies 1 through 3 in series. In a case where a sufficient electric current is secured, the laminated bodies 1 through 3 are preferably connected in parallel. In a case where a sufficient electric current is not needed, the laminated bodies 1 through 3 can be connected in series. Alternatively, serial connection and parallel connection can be combined inside the coin-shaped battery 101, as necessary. For example, the number of laminated bodies is increased, and such a configuration that two laminated bodies are connected in series and two laminated bodies are connected in parallel or two laminated bodies are connected in series and three laminated bodies are connected in parallel can be employed.

Note that the coin-shaped battery 101 in accordance with Embodiment 1 includes the laminated bodies 1 through 3, but the number of laminated bodies is not limited to three. Note also that the coin-shaped battery 101 has a structure in which an odd number of layers, for example, three layers of the laminated bodies 1 through 3 are stacked. Alternatively, the coin-shaped battery 101 can have a structure in which an even number of layers of laminated bodies are stacked. In the case of this structure, a layer in an uppermost laminated body which layer faces the flat plate 81 of the metal sealing plate 8 is a positive electrode layer. Accordingly, it is necessary to dispose an electrical insulator (not illustrated) between the positive electrode layer and the metal sealing plate 8. This electrical insulator can be disposed on a metal-sealing-plate-8 side or a positive-electrode-layer side of the pressurizing member 6. Alternatively, the pressurizing member can function as an electrical insulator.

Next, production of the coin-shaped battery 101 thus configured will be described.

Fig. 2 is a drawing illustrating how to form the laminated bodies 1 through 3 of the coin-shaped battery 101 in accordance with Embodiment 1 of the present invention. The laminated bodies 1 through 3 can be formed by a publicly known powder film forming method in which an electrostatic force is used (for example, electrostatic coating or an electrostatic screen film forming method (printing method)), as necessary. The following description will discuss a method of forming the laminated bodies 1 through 3 by the electrostatic screen film forming method. Note that laminated bodies of coin-shaped batteries in accordance with the other Embodiments later described are also formed by the following method.

First, the laminated bodies 1 through 3 are prepared by the electrostatic screen film forming method.

In the electrostatic screen film forming method employed in Embodiment 1, a device illustrated in Fig. 2 is used. The device includes a screen 201 and a substrate B. The screen 201 is a porous screen. The substrate B is a table on which a printed object, which is an object on which a film is to be formed, is placed. A negative electrode of a direct-current power source DC is connected to the screen 201, and a positive electrode of the direct-current power source DC is connected to the substrate B. Note that the positive electrode of the direct-current power source DC can be connected to the screen 201 and the negative electrode of the direct-current power source DC can be connected to the table B. It is not always necessary that one of the screen 201 and the substrate B be connected to the positive electrode and the other be connected to the negative electrode, provided that an electric potential difference occurs between the screen 201 and the printed object. Any one of the screen 201 and the substrate B can be set at a ground (earth) potential.

The screen 201 can be, for example, a commercially available mesh for screen printing. By altering an opening shape of the mesh as appropriate, it is possible to form a powder into any shape. In Embodiment 1, a mesh is employed which has a mesh count of 300/inch, a wire diameter of 30 pm, and openings of 55 pm. A material of the mesh is not limited to any particular one, provided that the material has electrical conductivity. The mesh employed in Embodiment 1 is a typical SUS mesh.

Note that the mesh count, the wire diameter, and the openings, the material, and the like of the mesh used as the screen 201 are preferably selected as appropriate depending on the powder or an environment.

Note also that a distance between the screen 201 and the substrate B is set to 10 mm, and a voltage of 8 kV is applied.

In such a device, by squeezing a powder 202 through the screen 201 with use of a squeegee 203, the powder 202 is brought into contact with the screen 201. This causes the powder 202 to be electrically charged. The powder 202 thus electrically charged drops through the screen 201 and adheres to the printed object by electrostatic induction. In this manner, the respective positive electrode layers 11, 21, and 31, the respective solid-electrolyte layers 12, 22, and 32, and the respective negative electrode layers 13, 23, and 33 of the laminated bodies 1 through 3 are formed.

Each of the positive electrode layers 11, 21, and 31 is formed from a positive electrode mixture layer, and each of the negative electrode layers 13, 23, and 33 is formed from a negative electrode mixture layer. Therefore, a positive electrode active material, which is a material of the positive electrode mixture layer, and a solid electrolyte are mixed together, and a negative electrode active material, which is a material of the negative electrode mixture layer, and a solid electrolyte are mixed together.

Each of the laminated bodies 1 through 3 is prepared as follows (stacking step). First, the positive electrode layer 11, 21, 31 (positive electrode mixture layer) is formed. The solid-electrolyte layer 12, 22, 32 is then formed on the positive electrode layer 11, 21, 31. Subsequently, the negative electrode layer 13, 23, 33 (negative electrode mixture layer) is formed on the solid-electrolyte layer 12, 22, 32. Note, however, that the order in which these layers in each of the laminated bodies 1 through 3 are formed is not limited to the above order, and any one of these layers can be formed first. Moreover, the positive electrode mixture layer, the solid-electrolyte layer, and the negative electrode mixture layer which have been formed can be pressurized so as to be flat, as necessary.

Each of the laminated bodies 1 through 3 thus prepared is then pressure-treated. In this pressurization treatment, pre-pressurization is first carried out with respect to each of the laminated bodies 1 through 3 under a reduced-pressure environment. In the pre-pressurization, pressure of 4 MPa (1 MPa to 5 MPa) is applied to each of the laminated bodies 1 through 3 for 3 seconds. The pre-pressurization is not always necessary, but is preferably carried out so that gas or a void is eliminated from an inside of each of the laminated bodies 1 through 3 each of which has been formed as a powder layer.

Next, main pressurization is carried out with respect to each of the laminated bodies 1 through 3. In the main pressurization, pressure of 1000 MPa (400 MPa to 1200 MPa) is applied to each of the laminated bodies 1 through 3 for 30 seconds. The pressure and pressurizing time in the main pressurization can be altered as appropriate depending on a material of the powder 202.

In each of the laminated bodies 1 through 3 compressed by the above pressurization, the positive electrode layer 11, 21, 31, the solid-electrolyte layer 12, 22, 32, and negative electrode layer 13, 23, 33 are firmly integrated. The solid-electrolyte layer 12, 22, 32 is caused to have a thickness of several micrometers to one hundred micrometers However, a weight of each of these layers, a thickness of each of these layers, a weight ratio between these layers, and the like in each of the laminated bodies 1 through 3 are each not limited to any particular range.

Note, however, that the solid-electrolyte layer 12, 22, 32 is preferably formed so as to be as thin as possible so that resistance of a battery is reduced. The solid-electrolyte layer 12, 22, 32 has an average thickness of not less than 5 pm and not more than 100 pm, preferably not less than 5 pm and not more than 70 pm, and according to the invention, not less than 5 pm and not more than 30 pm. In contrast, in a case where the solid-electrolyte layer 12, 22, 32 is formed by a method other than the powder film forming method in which an electrostatic force is used, it is difficult to form the solid-electrolyte layer 12, 22, 32 so as to be so thin. Note also that a ratio of a thickness of the negative electrode layer 13, 23, 33 to a thickness of the positive electrode layer 11, 21, 31 is preferably not less than 1.0.

The laminated bodies 1 through 3 thus prepared, the positive electrode current collector group 4, and the negative electrode current collector group 5 are stacked as illustrated in Fig. 1 (stacking step).

First, the positive electrode current collector 41 of the positive electrode current collector group 4 is disposed. The laminated body 1 is then disposed on the positive electrode current collector 41 so that the positive electrode layer 11 faces the positive electrode current collector 41. Next, the negative electrode current collector 52 of the negative electrode current collector group 5 is disposed on the negative electrode layer 13 of the laminated body 1. Subsequently, the laminated body 2 is disposed on the negative electrode current collector 52 so that the negative electrode layer 23 faces the negative electrode current collector 52. Subsequently, the positive electrode current collector 42 of the positive electrode current collector group 4 is disposed on the positive electrode layer 21 of the laminated body 2. Thereafter, the laminated body 3 is disposed on the positive electrode current collector 42 so that the positive electrode layer 31 faces the positive electrode current collector 42. Lastly, the negative electrode current collector 51 of the negative electrode current collector group 5 is disposed on the negative electrode layer 33 of the laminated body 3. A composite laminated body in which the laminated bodies 1 through 3, the positive electrode current collector group 4, and the negative electrode current collector group 5 are stacked is thus prepared. Note that the above stacking order can be opposite.

Aluminum foil is used for each of the positive electrode current collectors 41 and 42, and copper foil is used for each of the negative electrode current collectors 51 and 52. Each of the aluminum foil and the copper foil is preferably one that has toughness or rigidity to some extent. Each of the positive electrode current collectors 41 and 42 is formed from individual metal foil. Alternatively, the positive electrode current collectors 41 and 42 can be formed by, for example, folding back continuous metal foil. The same holds true for the negative electrode current collectors 51 and 52.

Before the composite laminated body is enclosed in the space formed by the metal case 7 and the metal sealing plate 8, the positive electrode current collector group 4 is connected to the flat plate 71, and the negative electrode current collector group 5 is connected to the flat plate 81. This connection is carried out by welding such as ultrasonic welding or laser welding, but can be alternatively carried out by a method other than welding. For example, the connection can be carried out with use of an electrically conductive adhesive, provided that it is possible to sufficiently reduce contact resistance. The electrically conductive adhesive can be a commercially available carbon-based electrically conductive adhesive or a commercially available electrically conductive ink. Such an electrically conductive adhesive or an electrically conductive coating material can be one that further contains gold or silver as electrically conductive particles. Note that, provided that it is possible to sufficiently reduce contact resistance, the positive electrode current collector group 4 and the flat plate 71 can be caused to be merely in physical contact with each other, instead of being connected to each other. Similarly, the negative electrode current collector group 5 and the flat plate 81 can be caused to be merely in physical contact with each other, instead of being connected to each other.

Lastly, the pressurizing member 6 is disposed on the inner surface of the flat plate 81 of the metal sealing plate 8, and the composite laminated body is disposed on the pressurizing member 6. Then, the metal case 7 is disposed on the metal sealing plate 8 via the gasket 9, and the edge of the side wall 72 of the metal case 7 is swaged by pressurization (enclosing step). This causes the metal case 7 and the metal sealing plate 8 to be joined together, so that the space in which the composite laminated body and the pressurizing member 6 are placed is sealed.

Note that the laminated bodies 1 through 3, the positive electrode current collector group 4, and the negative electrode current collector group 5 can be stacked on the metal sealing plate 8, instead of being stacked outside the metal sealing plate 8 as described above. In this case, the laminated bodies 1 through 3, the positive electrode current collector group 4, and the negative electrode current collector group 5 which have been stacked are enclosed in the space formed by the metal case 7 and the metal sealing plate 8. The same holds true for a coin-shaped battery 102 (see Fig. 3) in accordance with Embodiment 2 (later described).

The pressurizing member 6 is basically disposed between the flat plate 81 of the metal sealing plate 8 and the negative electrode current collector 51. Note, however, that the pressurizing member 6 can be disposed at any location in the enclosed space formed by the metal case 7 and the metal sealing plate 8, provided that the pressurizing member 6 can cause pressure to act on the composite laminated body composed of the laminated bodies 1 through 3, the positive electrode current collector group 4, and the negative electrode current collector group 5. For example, the pressurizing member 6 can be disposed between the flat plate 71 of the metal case 7 and the positive electrode current collector 41. Alternatively, the pressurizing member 6 can be disposed at any location in the composite laminated body. The same holds true for a coin-shaped battery 102 (see Fig. 3) in accordance with Embodiment 2 (later described).

As has been described, each of the laminated bodies 1 through 3 of the coin-shaped battery 101 is pressure-molded, so that each of the laminated bodies 1 through 3 is closely packed and each of the solid-electrolyte layers 12, 22, and 32 is made thin. This allows a reduction in resistance inside each of the laminated bodies 1 through 3. Therefore, according to the coin-shaped battery 101, it is possible to achieve sufficiently large output, without always applying great pressure to each of the laminated bodies 1 through 3 which are connected to each other. Furthermore, each of the laminated bodies 1 through 3 is formed so as to be thin by compression resulting from pressurization. This allows (i) the coin-shaped battery 101 to be thin and (ii) more laminated bodies to be stacked inside a coin-shaped can having a limited capacity, thereby allowing a resultant battery to have a high capacity.

As has been described, the pressurizing member 6 embedded in the coin-shaped battery 101 only needs to cause each of the positive electrode current collector group 4 and the negative electrode current collector group 5 to be in contact with the metal case 7 or the metal sealing plate 8, and only needs to cause a pressurizing force for pressurizing each of the laminated bodies 1 through 3 to be uniform. Therefore, the pressurizing member 6 does not need to have a great pressurizing force for pressurizing a battery element, unlike the elastic body (spring) of the coin-shaped battery disclosed in Patent Literature 3. Therefore, each of the metal case 7 and the metal sealing plate 8 does not need to have high rigidity, and accordingly each of the metal case 7 and the metal sealing plate 8 does not need to be formed so as to be thick. Thus, it is possible to reduce a weight and a size of the coin-shaped battery 101. Note that the pressurizing member 6 does not need to be used if it is not necessary. For example, in a case where (i) an interior of the coin-shaped can, which is composed of the metal case 7 and the metal sealing plate 8, is filled merely with the electrode layers and the current collectors and (ii) accordingly the coin-shaped can and the current collectors are in sufficient contact with each other without use of any pressurizing member, the pressurizing member 6 is not necessary.

### Embodiment 2

The following description will discuss Embodiment 2 of the present invention with reference to Fig. 3. Note that, in Embodiment 2, constituent elements having functions identical to those of constituent elements in Embodiment 1 are given identical reference signs and will not be described.

Fig. 3 is a cross-sectional view illustrating a structure of a coin-shaped battery 102 in accordance with Embodiment 2.

As illustrated in Fig. 3, the coin-shaped battery 102 includes laminated bodies 1 through 3, a pressurizing member 6, a metal case 7, a metal sealing plate 8, and a gasket 9, as with the case of the coin-shaped battery 101 in accordance with Embodiment 1. The coin-shaped battery 102 further includes a positive electrode current collector group 4A, a negative electrode current collector group 5A, and separators 10 and 20 (electrical insulator). In the coin-shaped battery 102, the laminated bodies 1 through 3 are disposed so that respective positive electrode layers 11, 21, and 31 of the laminated bodies 1 through 3 are each located on a side closer to a side wall 72 of the metal case 7.

The positive electrode current collector group 4A is one that is derived by adding a positive electrode current collector 43 to the positive electrode current collector group 4 of the coin-shaped battery 101. The negative electrode current collector group 5A is one that is derived by adding a negative electrode current collector 53 to the negative electrode current collector group 5 of the coin-shaped battery 101.

A positive electrode current collector 42 is different from the positive electrode current collector 42 of the coin-shaped battery 101 in that the positive electrode current collector 42 is disposed between the laminated body 1 and the laminated body 2 so as to be in contact with the positive electrode layer 21 of the laminated body 2. The positive electrode current collector 43 is disposed between the laminated body 2 and the laminated body 3 so as to be in contact with the positive electrode layer 31 of the laminated body 3.

A negative electrode current collector 52 is different from the negative electrode current collector 52 of the coin-shaped battery 101 in that the negative electrode current collector 52 is disposed between the laminated body 2 and the laminated body 3 so as to be in contact with the negative electrode layer 23 of the laminated body 2. The negative electrode current collector 53 is disposed between the laminated body 1 and the laminated body 2 so as to be in contact with the negative electrode layer 13 of the laminated body 1.

The separator 10 is made of an electrically insulating material, and is disposed between the positive electrode current collector 42 and the negative electrode current collector 53. The separator 10 thus electrically insulates the positive electrode current collector 42 from the negative electrode current collector 53.

The separator 20 is made of an electrically insulating material, and is disposed between the positive electrode current collector 43 and the negative electrode current collector 52. The separator 10 thus electrically insulates the positive electrode current collector 43 from the negative electrode current collector 52.

Note that, as with the case of the coin-shaped battery 101, the coin-shaped battery 102 in accordance with Embodiment 2 also includes the laminated bodies 1 through 3, but the number of laminated bodies is not limited to three. Note that the coin-shaped battery 102 also has a structure in which an odd number of layers, for example, three layers of the laminated bodies 1 through 3 are stacked. Alternatively, the coin-shaped battery 102 can have a structure in which an even number of layers of laminated bodies are stacked. In the case of this structure, a layer in an uppermost laminated body which layer faces a flat plate 81 of the metal sealing plate 8 is a negative electrode layer. Accordingly, unlike the coin-shaped battery 101, the coin-shaped battery 102 does not need to include an electrical insulator provided between the negative electrode layer and the metal sealing plate 8.

Next, production of the coin-shaped battery 102 thus configured will be described.

Preparation of the laminated bodies 1 through 3 is carried out similarly to preparation of those of the coin-shaped battery 101 in accordance with Embodiment 1, and therefore will not be described.

The laminated bodies 1 through 3 thus prepared, the positive electrode current collector group 4A, and the negative electrode current collector group 5A are stacked as illustrated in Fig. 3.

First, a positive electrode current collector 41 of the positive electrode current collector group 4A is disposed. The laminated body 1 is then disposed on the positive electrode current collector 41 so that the positive electrode layer 11 faces the positive electrode current collector 41. Next, the negative electrode current collector 53 of the negative electrode current collector group 5A, the separator 10, and the positive electrode current collector 42 of the positive electrode current collector group 4A are disposed in this order on the negative electrode layer 13 of the laminated body 1. Subsequently, the laminated body 2 is disposed on the positive electrode current collector 42 so that the positive electrode layer 21 faces the positive electrode current collector 42. Further, the negative electrode current collector 52 of the negative electrode current collector group 5A, the separator 20, and the positive electrode current collector 43 of the positive electrode current collector group 4A are disposed in this order on the negative electrode layer 23 of the laminated body 2. Thereafter, the laminated body 3 is disposed on the positive electrode current collector 43 so that the positive electrode layer 31 faces the positive electrode current collector 43. Lastly, a negative electrode current collector 51 of the negative electrode current collector group 5A is disposed on a negative electrode layer 33 of the laminated body 3. A composite laminated body in which the laminated bodies 1 through 3, the positive electrode current collector group 4, and the negative electrode current collector group 5 are stacked is prepared. Note that the above stacking order can be opposite.

Lastly, the pressurizing member 6 is disposed on an inner surface of the flat plate 81 of the metal sealing plate 8, and the composite laminated body is disposed on the pressurizing member 6. Then, the metal case 7 is disposed on the metal sealing plate 8 via the gasket 9, and an edge of the side wall 72 of the metal case 7 is swaged by pressurization. This causes the metal case 7 and the metal sealing plate 8 to be joined together, so that a space in which the composite laminated body and the pressurizing member 6 are placed is sealed.

Each of the laminated bodies 1 through 3 of the coin-shaped battery 102 as described above is also pressurized. This allows a reduction in resistance inside each of the laminated bodies 1 through 3. It is therefore possible for the coin-shaped battery 103 to secure sufficiently great output.

### Embodiment 3

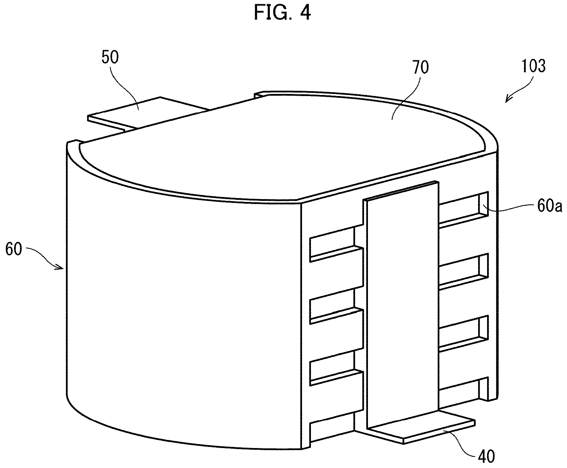

The following description will discuss Embodiment 3 of the present invention with reference to Figs. 4 through 6. Note that, in Embodiment 3, constituent elements having functions identical to those of constituent elements in Embodiments 1 and 2 are given identical reference signs and will not be described.

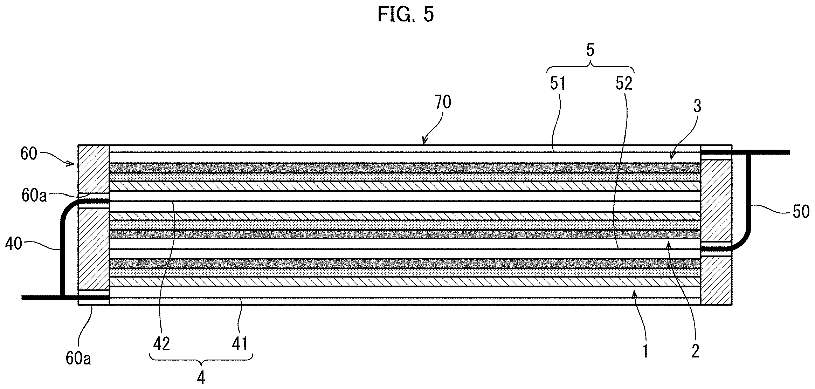

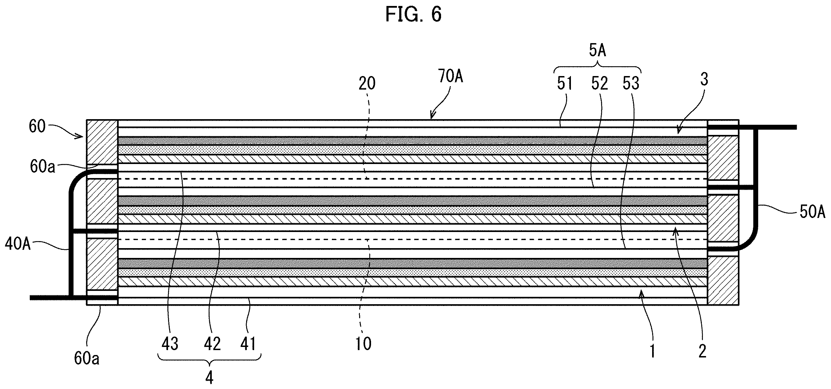

Fig. 4 is a perspective view illustrating an internal structure of a coin-shaped battery 103 in accordance with Embodiment 3. Fig. 5 is a cross-sectional view illustrating an internal structure of the coin-shaped battery 103 in accordance with Embodiment 3. Fig. 6 is a cross-sectional view illustrating another internal structure of the coin-shaped battery 103 in accordance with Embodiment 3.

The coin-shaped battery 103 illustrated in Fig. 4 includes a structure including an electrode layer laminated body 70 and an electrically insulating covering body 60 which covers the electrode layer laminated body 70. This structure is embedded (enclosed) in an outer casing formed by the metal case 7 and the metal sealing plate 8 of the coin-shaped battery 101 (see Fig. 1) in accordance with Embodiment 1 described above (not illustrated). The electrode layer laminated body 70 has a structure in which four layers of laminated bodies, a positive electrode current collector group which is connected to each of the four layers of the laminated bodies, and a negative electrode current collector group which is connected to each of the four layers of the laminated bodies are stacked.

The electrically insulating covering body 60 is a covering body made of an electrically insulating material, such as an electrically insulating glass-based, resin-based, or ceramic-based material, and covers an outer peripheral side surface of the electrode layer laminated body 70. The electrically insulating covering body 60 can be one that is formed by applying the electrically insulating material to the side surface of the electrode layer laminated body 70 and drying the electrically insulating material. Alternatively, the electrically insulating covering body 60 can be one that is designed and prepared in the form of a case which is capable of covering the electrode layer laminated body 70. The electrically insulating covering body 60 illustrated in Fig. 4 is in the form of a case, and has a planar shape composed of two parallel straight lines and two curved lines which are located on opposite sides of the two parallel straight lines, as viewed from above. The electrically insulating covering body 60 is formed in accordance with a shape of the electrode layer laminated body 70.

The electrically insulating covering body 60 has, in one of its flat side surfaces, current collection openings 60a for current collection carried out by the positive electrode current collector group. The current collection openings 60a are provided at locations corresponding to locations at which positive electrode current collectors of the positive electrode current collector group are disposed (current collection points). On the one of the flat side surfaces, a positive electrode current collection part 40 which is electrically connected to the positive electrode current collector group is provided. The electrically insulating covering body 60 also has, in the other of the flat side surfaces, current collection openings 60a for current collection carried out by the negative electrode current collector group. The current collection openings 60a are provided at locations corresponding to locations at which negative electrode current collectors of the negative electrode current collector group are disposed (current collection points). On the other of the flat side surfaces, a negative electrode current collection part 50 which is electrically connected to the negative electrode current collector group is provided.

As described above, the electrically insulating covering body 60 covers the laminated bodies in such a manner that the electrically insulating covering body 60 does not cover the current collection points. Further, the electrically insulating covering body 60 has the current collection openings 60a for connection between the positive electrode current collectors and the positive electrode current collection part 40, and has the current collection openings 60a for connection between the negative electrode current collectors and the negative electrode current collection part 50. This makes it possible to prevent (i) connection parts, at which the positive electrode current collectors are connected to the positive electrode current collection part 40, from being short-circuited with negative electrode layers of the laminated bodies and (ii) connection parts, at which the negative electrode current collectors are connected to the negative electrode current collection part 50, from being short-circuited with positive electrode layers of the laminated bodies. Moreover, since each of the laminated bodies is covered by the electrically insulating covering body 60, it is possible to prevent each of the laminated bodies from collapsing when violent shaking is applied to the coin-shaped battery 103.

The electrode layer laminated body 70 can alternatively have a structure in which three layers of laminated bodies are provided. This structure will be described below.

An electrode layer laminated body 70 illustrated in Fig. 5 has a structure which is applied to the coin-shaped battery 101 and in which laminated bodies 1 through 3, a positive electrode current collector group 4, and a negative electrode current collector group 5 are stacked. A positive electrode current collection part 40 is connected to positive electrode current collectors 41 and 42 of the positive electrode current collector group 4 by being partially inserted into current collection openings 60a of an electrically insulating covering body 60. A negative electrode current collection part 50 is connected to negative electrode current collectors 51 and 52 of the negative electrode current collector group 5 by being partially inserted into current collection openings 60a of the electrically insulating covering body 60.

An electrode layer laminated body 70A illustrated in Fig. 6 has a structure which is applied to the coin-shaped battery 102 and in which laminated bodies 1 through 3, a positive electrode current collector group 4A, and a negative electrode current collector group 5A are stacked. A positive electrode current collection part 40A is connected to positive electrode current collectors 41 through 43 of the positive electrode current collector group 4A by being partially inserted into current collection openings 60a of an electrically insulating covering body 60. A negative electrode current collection part 50A is connected to negative electrode current collectors 51 through 53 of the negative electrode current collector group 5A by being partially inserted into current collection openings 60a of the electrically insulating covering body 60.

### [Result of examining operation]

Result of examining operation of each of the coin-shaped batteries 101 through 103 in accordance with Embodiments 1 through 3 will be described below.

In a constant temperature bath which was kept at 25°C, each of the coin-shaped batteries 101 through 103 was charged to a charge completion voltage of 4.7 V with an electric current of 0.05 mA/cm², and then discharged to a discharge completion voltage of 2.8 V with an electric current of 0.05 mA/cm². Table 1 shows a charge capacity and a discharge capacity (an initial charge-discharge capacity) of each of the coin-shaped batteries 101 through 103.

**[Table 1]**

| Coin-shaped battery | Number of stacked laminated bodies | Charge capacity (mAh/g) | Discharge capacity (mAh/g) |
|---|---|---|---|
| Embodiment 1 | 3 | 450 | 320 |
| Embodiment 2 | 3 | 410 | 330 |
| Embodiment 3 | 3 | 460 | 340 |

As is clear from Table 1, any of the coin-shaped batteries 101 through 103, which have respective different current collection structures, operates as a battery which fits for practical use.

### Embodiment 4

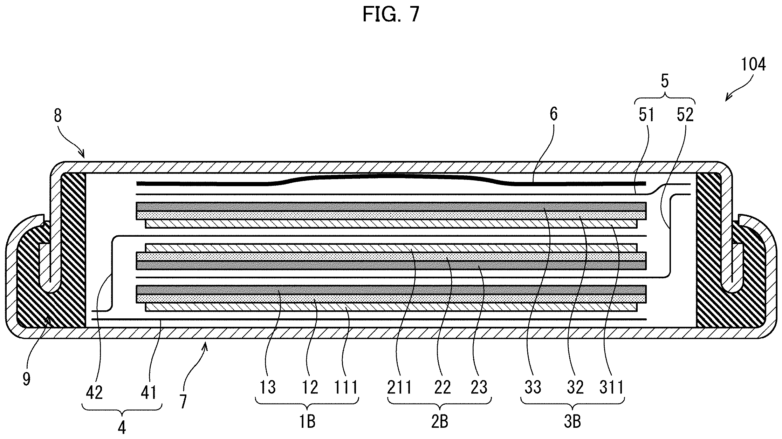

The following description will discuss Embodiment 4 of the present invention with reference to Fig. 7. Note that, in Embodiment 4, constituent elements having functions identical to those of constituent elements in Embodiment 1 are given identical reference signs and will not be described.

Fig. 7 is a cross-sectional view illustrating a structure of a coin-shaped battery 104 in accordance with Embodiment 4.

As illustrated in Fig. 7, the coin-shaped battery 104 includes a positive electrode current collector group 4, a negative electrode current collector group 5, a pressurizing member 6, a metal case 7, a metal sealing plate 8, and a gasket 9, as with the case of the coin-shaped battery 101 in accordance with Embodiment 1. The coin-shaped battery 104 further includes laminated bodies 1B through 3B.

The laminated body 1B includes a positive electrode layer 111 (first electrode layer), a solid-electrolyte layer 12, and a negative electrode layer 13 (second electrode layer) which has a polarity opposite from that of the positive electrode layer 111. The positive electrode layer 111, the solid-electrolyte layer 12, and the negative electrode layer 13 are stacked in this order. The positive electrode layer 111 is disposed on a side closer to a flat plate 71 of the metal case 7. The positive electrode layer 111 is formed so that an area of a layer surface of the positive electrode layer 111 (surface in contact with the solid-electrolyte layer 12) is smaller than that of a layer surface of the solid-electrolyte layer 12 (surface in contact with the positive electrode layer 111). The positive electrode layer 111 is also formed on the solid-electrolyte layer 12 so that an outer peripheral side surface (that is, outer peripheral surface) of the positive electrode layer 111 is located on an inner side of an outer peripheral side surface of the solid-electrolyte layer 12. An area of the negative electrode layer 13 is equal to that of the solid-electrolyte layer 12.

The laminated body 2B includes a positive electrode layer 211 (first electrode layer), a solid-electrolyte layer 22, and a negative electrode layer 23 (second electrode layer) which has a polarity opposite from that of the positive electrode layer 111. The positive electrode layer 211, the solid-electrolyte layer 22, and the negative electrode layer 23 are stacked in this order. The positive electrode layer 211 is disposed on a side closer to a flat plate 81 of the metal sealing plate 8. The positive electrode layer 211 is formed so that an area of a layer surface of the positive electrode layer 211 (surface in contact with the solid-electrolyte layer 22) is smaller than that of a layer surface of the solid-electrolyte layer 22 (surface in contact with the positive electrode layer 211). The positive electrode layer 211 is also formed on the solid-electrolyte layer 22 so that an outer peripheral side surface of the positive electrode layer 211 is located on an inner side of an outer peripheral side surface of the solid-electrolyte layer 22. An area of the negative electrode layer 23 is equal to that of the solid-electrolyte layer 22.

The laminated body 3B includes a positive electrode layer 311 (first electrode layer), a solid-electrolyte layer 32, and a negative electrode layer 33 (second electrode layer) which has a polarity opposite from that of the positive electrode layer 111. The positive electrode layer 311, the solid-electrolyte layer 32, and the negative electrode layer 33 are stacked in this order. The positive electrode layer 311 is disposed on a side closer to the flat plate 71 of the metal case 7. The positive electrode layer 311 is formed so that an area of a layer surface of the positive electrode layer 311 (surface in contact with the solid-electrolyte layer 32) is smaller than that of a layer surface of the solid-electrolyte layer 32 (surface in contact with the positive electrode layer 311). The positive electrode layer 311 is also formed on the solid-electrolyte layer 32 so that an outer peripheral side surface of the positive electrode layer 311 is located on an inner side of an outer peripheral side surface of the solid-electrolyte layer 32. An area of the negative electrode layer 33 is equal to that of the solid-electrolyte layer 32.

In this manner, the laminated bodies 1B and 2B are disposed so that the negative electrode layer 13 of the laminated body 1 faces the negative electrode layer 23 of the laminated body 2. Further, the laminated bodies 2B and 3B are disposed so that the positive electrode layer 211 of the laminated body 2B faces the positive electrode layer 311 of the laminated body 3B. In other words, the positive electrode layer 111 of the laminated body 1B and the positive electrode layer 311 of the laminated body 3B are each disposed on an identical side, and the negative electrode layer 13 of the laminated body 1B and the negative electrode layer 33 of the laminated body 3B are each disposed on an identical side. Meanwhile, the positive electrode layer 211 of the laminated body 2B is disposed on a side different from the side on which each of the positive electrode layer 111 of the laminated body 1B and the positive electrode layer 311 of the laminated body 3B are each disposed, and the negative electrode layer 23 of the laminated body 2B is disposed on a side different from the side on which the negative electrode layer 13 of the laminated body 1B and the negative electrode layer 33 of the laminated body 3B are disposed.

As has been described, the laminated bodies 1B through 3B are derived by replacing the positive electrode layer 11 of the laminated body 1, the positive electrode layer 21 of the laminated body 2, and the positive electrode layer 31 of the laminated body 3 in the coin-shaped battery 101 in accordance with Embodiment 1 with the positive electrode layer 111, the positive electrode layer 211, and positive electrode layer 311, respectively. Therefore, the coin-shaped battery 104 is otherwise configured similarly to the coin-shaped battery 101. Further, the positive electrode layers 111, 211, and 311 are made of a material identical to that of the positive electrode layers 11, 21, and 31 of the coin-shaped battery 101 in accordance with Embodiment 1.

The coin-shaped battery 104 configured as described above is produced by a method identical to a method of producing the coin-shaped battery 101 in accordance with Embodiment 1. According to the coin-shaped battery 104, the positive electrode layers 111, 211, and 311 are formed so that (i) the area of the layer surface of each of the positive electrode layers 111, 211, and 311 is smaller than the area of the layer surface of the solid-electrolyte layer 12 and (ii) the outer peripheral side surface of each of the positive electrode layers 111, 211, and 311 is located on the inner side of the outer peripheral side surface of a corresponding one of the solid-electrolyte layers 12, 22, and 32.

The respective outer peripheral side surfaces of the positive electrode layers 111, 211, and 311 and respective outer peripheral side surfaces of the negative electrode layers 13, 23, and 33 may collapse due to vibration or an excess load which the coin-shaped battery 104 receives while being produced or in use. In particular, in a case where the coin-shaped battery 104 is small in size, the coin-shaped battery 104 is likely to be affected by vibration because the coin-shaped battery 104 is often used by being mounted on a mobile device. In contrast, since each of the positive electrode layers 111, 211, and 311 is formed as described above, it is possible to prevent each of the positive electrode layers 111, 211, and 311 from being short-circuited with a corresponding one of the negative electrode layers 13, 23, and 33 via a collapsed powder material. Therefore, it is possible to significantly improve a product yield and a product reliability of the coin-shaped battery 104.

Note that, in Embodiment 4, (i) the area of the layer surface of each of the positive electrode layers 111, 211, and 311 can be alternatively made equal to an area of a layer surface of a corresponding one of the negative electrode layers 13, 23, and 33 and (ii) the area of the layer surface of each of the solid-electrolyte layers 12, 22, and 32 can be alternatively made larger than the area of the layer surface of a corresponding one of the positive electrode layers 111, 211, and 311 and the area of the layer surface of a corresponding one of the negative electrode layers 13, 23, and 33. Also with this configuration, it is possible to prevent each of the positive electrode layers 111, 211, and 311 from being short-circuited with a corresponding one of the negative electrode layers 13, 23, and 33.

Note also that the configuration in accordance with Embodiment 4 can be applied to the coin-shaped battery 101 in accordance with Embodiment 1 as well as the coin-shaped battery 102 in accordance with Embodiment 2 and the coin-shaped battery 103 in accordance with Embodiment 3, as illustrated in Fig. 7.

### <Variation>

A variation of Embodiment 4 will be described below.

According to the coin-shaped battery 104 in accordance with Embodiment 4, each of the laminated bodies 1B through 3B is prepared as follows. First, the positive electrode layer 111, 211, 311 (positive electrode mixture layer) is formed. The solid-electrolyte layer 12, 22, 32 is then formed on the positive electrode layer 111, 211, 311. Subsequently, the negative electrode layer 13, 23, 33 (negative electrode mixture layer) is formed on the solid-electrolyte layer 12, 22, 32.

In contrast, according to a coin-shaped battery 104 in accordance with the present variation, each of laminated bodies 1B through 3B is prepared as follows. First, a negative electrode layer 13, 23, 33 is formed. A solid-electrolyte layer 12, 22, 32 is then formed on the negative electrode layer 13, 23, 33. Subsequently, a positive electrode layer 111, 211, 311 is formed on the solid-electrolyte layer 12, 22, 32.

### Embodiment 5

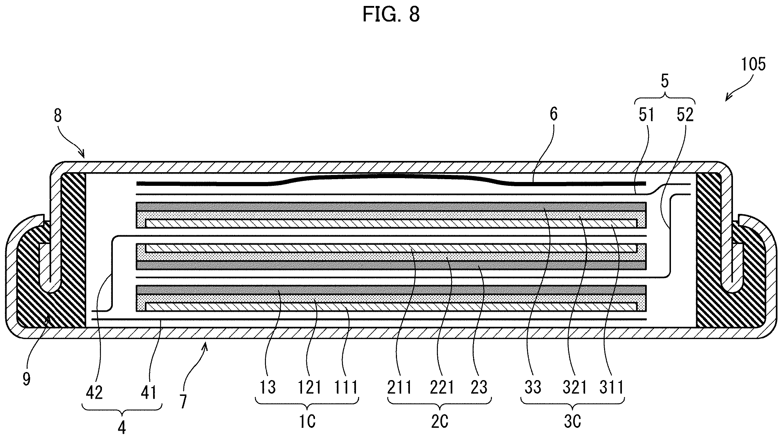

The following description will discuss Embodiment 5 of the present invention with reference to Fig. 8. Note that, in Embodiment 5, constituent elements having functions identical to those of constituent elements in Embodiments 1 and 4 are given identical reference signs and will not be described.

Fig. 8 is a cross-sectional view illustrating a structure of a coin-shaped battery 105 in accordance with Embodiment 5.

As illustrated in Fig. 8, the coin-shaped battery 105 includes a positive electrode current collector group 4, a negative electrode current collector group 5, a pressurizing member 6, a metal case 7, a metal sealing plate 8, and a gasket 9, as with the case of the coin-shaped battery 104 in accordance with Embodiment 4. The coin-shaped battery 105 further includes laminated bodies 1C through 3C.

The laminated body 1C includes a positive electrode layer 111, a solid-electrolyte layer 121, and a negative electrode layer 13. The positive electrode layer 111, the solid-electrolyte layer 121, and the negative electrode layer 13 are stacked in this order. The solid-electrolyte layer 121 is formed so as to cover an outer peripheral side surface of the positive electrode layer 111.

The laminated body 2C includes a positive electrode layer 211, a solid-electrolyte layer 221, and a negative electrode layer 23. The positive electrode layer 211, the solid-electrolyte layer 221, and the negative electrode layer 23 are stacked in this order. The solid-electrolyte layer 221 is formed so as to cover an outer peripheral side surface of the positive electrode layer 211.

The laminated body 3C includes a positive electrode layer 311, a solid-electrolyte layer 321, and a negative electrode layer 33. The positive electrode layer 311, the solid-electrolyte layer 321, and the negative electrode layer 33 are stacked in this order. The solid-electrolyte layer 321 is formed so as to cover an outer peripheral side surface of the positive electrode layer 311.

The coin-shaped battery 105 configured as described above is produced by a method identical to the method of producing the coin-shaped battery 101 in accordance with Embodiment 1. The laminated bodies 1C through 3C are derived by replacing the solid-electrolyte layer 12 of the laminated body 1B, the solid-electrolyte layer 22 of the laminated body 2B, and the solid-electrolyte layer 32 of the laminated body 3B in the coin-shaped battery 104 in accordance with Embodiment 4 with the solid-electrolyte layer 121, the solid-electrolyte layer 221, and the solid-electrolyte layer 321, respectively. Therefore, the coin-shaped battery 105 is otherwise configured similarly to the coin-shaped battery 104. Further, the solid-electrolyte layers 121, 221, and 321 are made of a material identical to that of the solid-electrolyte layers 12, 22, and 32 of the coin-shaped battery 101 in accordance with Embodiment 1.

In the coin-shaped battery 105 configured as described above, each of the solid-electrolyte layers 121, 221, and 321 is formed so as to cover the outer peripheral side surface of a corresponding one of the positive electrode layers 111, 211, and 311. This makes it possible to prevent the outer peripheral side surface of each of the positive electrode layers 111, 211, and 311 from collapsing. Furthermore, as compared to the coin-shaped battery 104 in accordance with Embodiment 4, it is possible to further reduce a possibility that each of the positive electrode layers 111, 211, and 311 is short-circuited with a corresponding one of the negative electrode layers 13, 23, and 33 via a powder material produced by collapse of the outer peripheral side surface of the corresponding one of the negative electrode layers 13, 23, and 33. Therefore, it is possible to further improve a product yield and a product reliability of the coin-shaped battery 104.

Note that, as with the case of the coin-shaped battery 104 in accordance with Embodiment 4, the configuration in accordance with Embodiment 5 can be applied to the coin-shaped battery 101 in accordance with Embodiment 1 as well as the coin-shaped battery 102 in accordance with Embodiment 2 and the coin-shaped battery 103 in accordance with Embodiment 3.

### [Result of comparing yields]

A result of comparing a yield of the coin-shaped battery 104 in accordance with Embodiment 4 and a yield of the coin-shaped battery 105 in accordance with Embodiment 5 will be described below.

Here, a Comparative Example was prepared. A yield of a coin-shaped battery in accordance with the Comparative Example, the yield of the coin-shaped battery 104, and the yield of the coin-shaped battery 105 were compared.

The coin-shaped battery in accordance with the Comparative Example has a configuration identical to that of the coin-shaped battery 105, except that positive electrode layers, solid-electrolyte layers, and negative electrode layers are identical to each other in area and shape. The positive electrode layers, the solid-electrolyte layers, and the negative electrode layers, which are identical to each other in area, are stacked, and thereby laminated bodies are formed.

First, 100 coin-shaped batteries in accordance with the Comparative Example, 100 coin-shaped batteries 104, and 100 coin-shaped batteries 105 were produced. Then, the yield of the coin-shaped battery in accordance with the Comparative Example, the yield of the coin-shaped battery 104, and the yield of the coin-shaped battery 105 were checked. As a result, the yield of the coin-shaped battery in accordance with the Comparative Example was 60%. In contrast, the yield of the coin-shaped battery 104 was 80%, and the yield of the coin-shaped battery 105 was 86%. As such, the yield of the coin-shaped battery 104 and the yield of the coin-shaped battery 105 were each high. It is considered that such high yields are achieved because each of the positive electrode layers 111, 211, and 311 was prevented from being short-circuited with a corresponding one of the negative electrode layers 13, 23, and 33 within an outer casing.

In a constant temperature bath which was kept at 25°C, each of the coin-shaped batteries 104 and 105 was charged to a charge completion voltage of 4.7 V with an electric current of 0.05 mA/cm², and then discharged to a discharge completion voltage of 2.8 V with an electric current of 0.05 mA/cm². Each of the coin-shaped batteries 104 and 105 had an initial charge capacity of 420 mAh/g and an initial discharge capacity of 310 mAh/g. Accordingly, it is found that any of the coin-shaped batteries 104 and 105 operates as a battery which fits for practical use.

### Embodiment 6

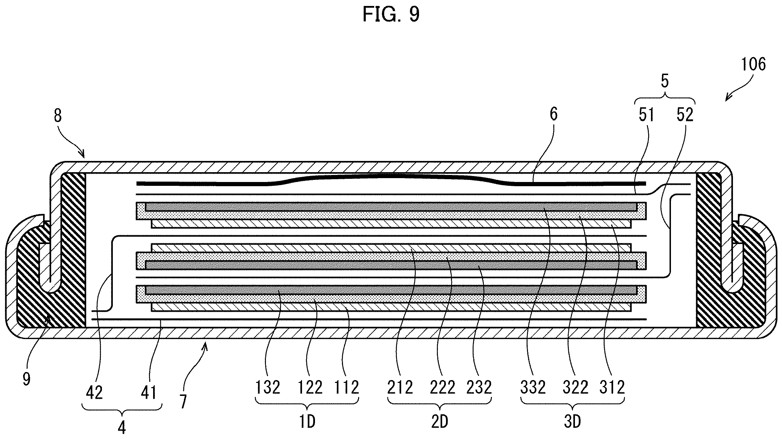

The following description will discuss Embodiment 6 of the present invention with reference to Fig. 9. Note that, in Embodiment 6, constituent elements having functions identical to those of constituent elements in Embodiments 1 and 5 are given identical reference signs and will not be described.

Fig. 9 is a cross-sectional view illustrating a structure of a coin-shaped battery 106 in accordance with Embodiment 6.

As illustrated in Fig. 9, the coin-shaped battery 106 includes a positive electrode current collector group 4, a negative electrode current collector group 5, a pressurizing member 6, a metal case 7, a metal sealing plate 8, and a gasket 9, as with the case of the coin-shaped battery 104 in accordance with Embodiment 4. The coin-shaped battery 106 further includes laminated bodies 1D through 3D.

The laminated body 1D includes a negative electrode layer 132 (first electrode layer), a solid-electrolyte layer 122, and a positive electrode layer 112 (second electrode layer) which has a polarity opposite from that of the negative electrode layer 132. The negative electrode layer 132, the solid-electrolyte layer 122, and the positive electrode layer 112 are stacked in this order. The solid-electrolyte layer 122 is disposed between the positive electrode layer 112 and the negative electrode layer 132, and is formed so as to cover an outer peripheral side surface of the negative electrode layer 132.

The positive electrode layer 112 is formed so that an area of a layer surface of the positive electrode layer 112 (surface in contact with the solid-electrolyte layer 122) is smaller than that of a layer surface of the solid-electrolyte layer 122 (surface in contact with the positive electrode layer 112). The positive electrode layer 112 is formed so that the area of the layer surface of the positive electrode layer 112 is smaller than that of a layer surface of the negative electrode layer 132 (surface in contact with the solid-electrolyte layer 122). The positive electrode layer 112 is also formed on the solid-electrolyte layer 122 so that an outer peripheral side surface of the positive electrode layer 112 is located on an inner side of an outer peripheral side surface of the solid-electrolyte layer 122.

The laminated body 2D includes a negative electrode layer 232 (first electrode layer), a solid-electrolyte layer 222, and a positive electrode layer 212 (second electrode layer) which has a polarity opposite from that of the negative electrode layer 232. The negative electrode layer 232, the solid-electrolyte layer 222, and the positive electrode layer 212 are stacked in this order. The solid-electrolyte layer 222 is disposed between the positive electrode layer 212 and the negative electrode layer 232, and is formed so as to cover an outer peripheral side surface of the negative electrode layer 232.

The positive electrode layer 212 is formed so that an area of a layer surface of the positive electrode layer 212 (surface in contact with the solid-electrolyte layer 222) is smaller than that of a layer surface of the solid-electrolyte layer 222 (surface in contact with the positive electrode layer 212). The positive electrode layer 212 is formed so that the area of the layer surface of the positive electrode layer 212 is smaller than that of a layer surface of the negative electrode layer 232 (surface in contact with the solid-electrolyte layer 222). The positive electrode layer 212 is also formed on the solid-electrolyte layer 222 so that an outer peripheral side surface of the positive electrode layer 212 is located on an inner side of an outer peripheral side surface of the solid-electrolyte layer 222.

The laminated body 3D includes a negative electrode layer 332 (first electrode layer), a solid-electrolyte layer 322, and a positive electrode layer 312 (second electrode layer) which has a polarity opposite from that of the negative electrode layer 332. The negative electrode layer 332, the solid-electrolyte layer 322, and the positive electrode layer 312 are stacked in this order. The solid-electrolyte layer 322 is disposed between the positive electrode layer 312 and the negative electrode layer 332, and is formed so as to cover an outer peripheral side surface of the negative electrode layer 332.

The positive electrode layer 312 is formed so that an area of a layer surface of the positive electrode layer 312 (surface in contact with the solid-electrolyte layer 322) is smaller than that of a layer surface of the solid-electrolyte layer 322 (surface in contact with the positive electrode layer 312). The positive electrode layer 312 is formed so that the area of the layer surface of the positive electrode layer 312 is smaller than that of a layer surface of the negative electrode layer 332 (surface in contact with the solid-electrolyte layer 322). The positive electrode layer 312 is also formed on the solid-electrolyte layer 322 so that an outer peripheral side surface of the positive electrode layer 312 is located on an inner side of an outer peripheral side surface of the solid-electrolyte layer 322.

The coin-shaped battery 106 configured as described above is produced by a method identical to the method of producing the coin-shaped battery 101 in accordance with Embodiment 1. Note, however, that, in each of the laminated bodies 1D through 3D, the negative electrode layer 132, 232, 332 is formed, the solid-electrolyte layer 122, 222, 322 is formed on the negative electrode layer 132, 232, 332, and then the positive electrode layer 1112, 212, 312 is formed on the solid-electrolyte layer 122, 222, 322.

The solid-electrolyte layers 122, 222, and 322 are made of a material identical to that of the solid-electrolyte layers 12, 22, and 32 of the coin-shaped battery 101 in accordance with Embodiment 1. Further, the positive electrode layers 112, 212, and 312 are made of a material identical to that of the positive electrode layers 11, 21, and 31 of the coin-shaped battery 101. Further, the negative electrode layers 132, 232, and 332 are made of a material identical to that of the negative electrode layers 13, 23, and 33 of the coin-shaped battery 101.

In the coin-shaped battery 106 configured as described above, each of the solid-electrolyte layers 122, 222, and 322 is formed so as to cover the outer peripheral side surface of a corresponding one of the negative electrode layers 132, 232, and 332. This makes it possible to prevent the outer peripheral side surface of each of the negative electrode layers 132, 232, 332 from collapsing. Furthermore, it is possible to reduce a possibility that each of the positive electrode layers 112, 212, and 312 is short-circuited with a corresponding one of the negative electrode layers 132, 232, and 332 via a powder material produced by collapse of the outer peripheral side surface of the corresponding one of the positive electrode layers 112, 212, and 312. Therefore, it is possible to improve a product yield and a product reliability of the coin-shaped battery 106.

### Reference Signs List

1 through 3, 1B through 3B Laminated body
7 Metal case (outer casing)
8 Metal sealing plate (outer casing)
11, 21, 31, 111, 211, 311 Positive electrode layer (first electrode layer)
12, 22, 32, 121, 132, 221, 222, 321, 322 Solid-electrolyte layer
13, 23, 33 Negative electrode layer (second electrode layer)
112, 212, 312 Positive electrode layer (second electrode layer)
132, 232, 332 Negative electrode layer (first electrode layer)
60 Electrically insulating covering member
70 Electrode layer laminated body
101 through 105 Coin-shaped battery

## Claims

1. A coin-shaped battery comprising:
a plurality of laminated bodies (1, 2, 3) each of which includes a first electrode layer (11, 21, 31), a second electrode layer (13, 23, 33) having a polarity opposite from a polarity of the first electrode layer (11, 21, 31), and a solid-electrolyte layer (12, 22, 32), the first electrode layer (11, 21, 31), the second electrode layer (13, 23, 33), and the solid-electrolyte layer (12, 22, 32) being stacked so that the solid-electrolyte layer (12, 22, 32) is disposed between the first electrode layer (11, 21, 31) and the second electrode layer (13, 23, 33); and
an outer casing in which the plurality of laminated bodies (1, 2, 3) are enclosed,
the plurality of laminated bodies (1, 2, 3) being compressed by pressurization,
each of the solid-electrolyte layers (12, 22, 32) in the plurality of laminated bodies (1, 2, 3) having an average thickness of not less than 5 µm and not more than 30 µm,
**characterized in that** the coin-shaped battery further comprising:
an electrically insulating covering body (60) which is embedded in the outer casing and which covers an outer peripheral side surface of a stack of the laminated bodies (1, 2, 3),
one of side surfaces of the electrically insulating covering body (60) having first current collection openings (60a) for current collection carried out by a first current collector group, the first current collection openings (60a) being provided at locations corresponding to locations at which positive electrode current collectors of the first current collector group are disposed, the one of the side surfaces of the electrically insulating covering body (60) having a first current collection part (40) which is electrically connected to the first current collector group,
the other of the side surfaces of the electrically insulating covering body (60) having second current collection openings (60a) for current collection carried out by a second current collector group, the second current collection opening (60a) being provided at locations corresponding to locations at which negative electrode current collectors of the second current collector group are disposed, the other of the side surfaces of the electrically insulating covering body (60) having a second current collection part (50) which is electrically connected to the second current collector group.

2. The coin-shaped battery as set forth in claim 1, wherein one of the first electrode layer (11, 21, 31) and the second electrode layer (13, 23, 33) is formed so that (i) an area of a layer surface of the one of the first electrode layer (11, 21, 31) and the second electrode layer (13, 23, 33) is smaller than an area of a layer surface of the solid-electrolyte layer (12, 22, 32) and (ii) an outer peripheral side surface of the one of the first electrode layer (11, 21, 31) and the second electrode layer (13, 23, 33) is located on an inner side of an outer peripheral side surface of the solid-electrolyte layer (12, 22, 32).

3. The coin-shaped battery as set forth in claim 1 or 2, wherein an outer peripheral side surface of one of the first electrode layer (11, 21, 31) and the second electrode layer (13, 23, 33) is covered by the solid-electrolyte layer (12, 22, 32).

## Patentansprüche

1. Münzförmige Batterie, umfassend:
eine Vielzahl von laminierten Körpern (1, 2, 3), von denen jeder eine erste Elektrodenschicht (11, 21, 31), eine zweite Elektrodenschicht (13, 23, 33) mit einer Polarität entgegengesetzt zu einer Polarität der ersten Elektrodenschicht (11, 21, 31) und eine Festelektrolytschicht (12, 22, 32) umfasst, wobei die erste Elektrodenschicht (11, 21, 31), die zweite Elektrodenschicht (13, 23, 33) und die Festelektrolytschicht (12, 22, 32) so gestapelt sind, dass die Festelektrolytschicht (12, 22, 32) zwischen der ersten Elektrodenschicht (11, 21, 31) und der zweiten Elektrodenschicht (13, 23, 33) angeordnet ist; und
ein Außengehäuse, in dem die Vielzahl von laminierten Körpern (1, 2 3) umschlossen ist,
wobei die Vielzahl von laminierten Körpern (1, 2, 3) durch Druckbeaufschlagung komprimiert werden,
wobei jede der Festelektrolytschichten (12, 22, 32) in der Vielzahl von laminierten Körpern (1, 2, 3) eine durchschnittliche Stärke von nicht weniger als 5 µm und nicht mehr als 30 µm aufweist,
**dadurch gekennzeichnet, dass** die münzförmige Batterie ferner umfasst:
einen elektrisch isolierenden Abdeckkörper (60), der im Außengehäuse eingebettet ist und der eine äußere Umfangsseitenfläche eines Stapels der laminierten Körper (1, 2, 3) abdeckt,
wobei eine von Seitenflächen des elektrisch isolierenden Abdeckkörpers (60) erste Stromabnahmeöffnungen (60a) zur Stromabnahme, durchgeführt durch eine erste Stromabnehmergruppe, aufweist, wobei die ersten Stromabnahmeöffnungen (60a) an Positionen entsprechend Positionen, an denen Pluspol-Stromabnehmer der ersten Stromabnehmergruppe angeordnet sind, angeordnet sind, wobei die eine der Seitenflächen des elektrisch isolierenden Abdeckkörpers (60) einen ersten Stromabnahmeteil (40) aufweist, der mit der ersten Stromabnehmergruppe elektrisch verbunden ist,
wobei die andere der Seitenflächen des elektrisch isolierenden Abdeckkörpers (60) zweite Stromabnahmeöffnungen (60a) zur Stromabnahme, durchgeführt durch eine zweite Stromabnehmergruppe, aufweist, wobei die zweiten Stromabnahmeöffnungen (60a) an Positionen entsprechend Positionen, an denen Minuspol-Stromabnehmer der zweiten Stromabnehmergruppe angeordnet sind, angeordnet sind, wobei die andere der Seitenflächen des elektrisch isolierenden Abdeckkörpers (60) einen zweiten Stromabnahmeteil (50) aufweist, der mit der zweiten Stromabnehmergruppe elektrisch verbunden ist.

2. Münzförmige Batterie nach Anspruch 1, wobei eine von erster Elektrodenschicht (11, 21, 31) und zweiter Elektrodenschicht (13, 23, 33) so ausgebildet ist, dass (i) eine Fläche einer Schichtoberfläche der einen von erster Elektrodenschicht (11, 21, 31) und zweiter Elektrodenschicht (13, 23, 33) kleiner ist als eine Fläche einer Schichtoberfläche der Festelektrolytschicht (12, 22, 32), und (ii) eine äußere Umfangsseitenfläche der einen von erster Elektrodenschicht (11, 21, 31) und zweiter Elektrodenschicht (13, 23, 33) auf einer Innenseite einer äußeren Umfangsseitenfläche der Festelektrolytschicht (12, 22, 32) angeordnet ist.

3. Münzförmige Batterie nach Anspruch 1 oder 2, wobei eine äußere Umfangsseitenfläche von erster Elektrodenschicht (11, 21, 31) und zweiter Elektrodenschicht (13, 23, 33) von der Festelektrolytschicht (12, 22, 32) abgedeckt ist.

## Revendications

1. Batterie en forme de pièce comprenant :
une pluralité de corps stratifiés (1, 2, 3) dont chacun comprend une première couche d'électrode (11, 21, 31), une seconde couche d'électrode (13, 23, 33) ayant une polarité opposée à une polarité de la première électrode couche (11, 21, 31), et une couche d'électrolyte solide (12, 22, 32), la première couche d'électrode (11, 21, 31), la seconde couche d'électrode (13, 23, 33) et la couche d'électrolyte solide (12, 22, 32) étant empilées de sorte que la couche d'électrolyte solide (12, 22, 32) soit disposée entre la première couche d'électrode (11, 21, 31) et la seconde couche d'électrode (13, 23, 33) ; et
un boîtier externe dans lequel sont enfermés la pluralité de corps stratifiés (1, 2, 3),
la pluralité de corps stratifiés (1, 2, 3) étant comprimés par pressurisation,
chacune des couches d'électrolyte solide (12, 22, 32) dans la pluralité de corps stratifiés (1, 2, 3) ayant une épaisseur moyenne d'au moins 5 µm et d'au plus 30 µm,
**caractérisée en ce que** la batterie en forme de pièce comprend en outre :
un corps de recouvrement électriquement isolant (60) qui est intégré dans le boîtier externe et qui couvre une surface latérale périphérique externe d'un empilement de corps stratifiés (1, 2, 3),
l'une des surfaces latérales du corps de recouvrement électriquement isolant (60) ayant des premières ouvertures de collecte de courant (60a) pour une collecte de courant réalisée par un premier groupe de collecteurs de courant, les premières ouvertures de collecte de courant (60a) étant prévues à des emplacements correspondant à des emplacements auxquels sont disposés des collecteurs de courant à électrode positive du premier groupe de collecteurs de courant, l'une des surfaces latérales du corps de recouvrement électriquement isolant (60) ayant une première partie de collecte de courant (40) qui est électriquement connectée au premier groupe de collecteurs de courant,
l'autre des surfaces latérales du corps de recouvrement électriquement isolant (60) ayant des secondes ouvertures de collecte de courant (60a) pour une collecte de courant réalisée par un second groupe de collecteurs de courant, la seconde ouverture de collecte de courant (60a) étant prévue à des emplacements correspondant à des emplacements auxquels sont disposés des collecteurs de courant à électrode négative du second groupe de collecteurs de courant, l'autre des surfaces latérales du corps de recouvrement électriquement isolant (60) ayant une seconde partie de collecte de courant (50) qui est électriquement connectée au second groupe de collecteurs de courant.

2. Batterie en forme de pièce selon la revendication 1, dans laquelle l'une de la première couche d'électrode (11, 21, 31) et de la seconde couche d'électrode (13, 23, 33) est formée de sorte que (i) une aire d'une surface de couche de l'une de la première couche d'électrode (11, 21, 31) et de la seconde couche d'électrode (13, 23, 33) soit plus petite qu'une aire d'une surface de couche de la couche d'électrolyte solide (12, 22, 32) et (ii) une surface latérale périphérique externe de l'une de la première couche d'électrode (11, 21, 31) et de la seconde couche d'électrode (13, 23, 33) soit située sur un côté interne d'une surface latérale périphérique externe de la couche d'électrolyte solide (12, 22, 32).

3. Batterie en forme de pièce selon la revendication 1 ou 2, dans laquelle une surface latérale périphérique externe de l'une de la première couche d'électrode (11, 21, 31) et de la seconde couche d'électrode (13, 23, 33) est recouverte par la couche d'électrolyte solide (12, 22, 32).
